# EUROPEAN PATENT APPLICATION

(11) **EP 4 796 822 A1**
(43) Date of publication of application: **26.08.2026**
(21) Application number: 25159459.4
(22) Date of filing: 21.02.2025
(51) Int. Cl.: F16K 31/06, F16K 31/10, F16K 31/524, F16K 31/528, F16K 31/56

(54) **SOLENOID VALVE AND VEHICLE WITH SOLENOID VALVE**

(71) Applicant: Volvo Car Corporation, 405 31 Göteborg (SE)
(72) Inventor: SOYDAN, Faruk, 40531 Göteborg (SE); ANDERSSON, Daniella Eugenia, 40531 Göteborg (SE)
(74) Representative: Kransell & Wennborg KB

(57) **Abstract**

The disclosure relates to a solenoid valve (10), comprising: a valve body (20) having an inlet port (21), an outlet port (22) and a valve seat (23) between the inlet port (21) and the outlet port (22); a plunger (30); a spring element (40) biasing the plunger (30) towards or away from the valve seat (23) for adopting a first valve position (FVP); a solenoid element (50) at least partially surrounding the plunger (30), wherein the solenoid element (50) is configured to generate an electromagnetic field (51) for moving the plunger (30) against the bias of the spring element (40), the plunger (30) thereby adopting a second valve position (SVP) different from the first valve position (FVP); a linkage element (60) linking the plunger (30) to a linkage portion (70) of the solenoid valve (10); and a pathway (80) in the linkage portion (70) or the plunger (30), wherein an end portion (61, 62) of the linkage element (60) is moveable along the pathway (80) following the movement of the plunger (30), the pathway (80) is configured with a first end position (FEP) and a second end position (SEP) for the end portion (61, 62), and the linkage element (60) maintains the second valve position (SVP) in the second end position (SEP) when the solenoid element (50) does not generate the electromagnetic field (51).

## Description

### TECHNICAL FIELD

The present disclosure relates to a solenoid valve and a vehicle comprising the solenoid valve.

### BACKGROUND

Solenoid valves are widely used to direct a flow of a fluid or stop/open the flow of the fluid. One of the drawbacks with existing solenoid valve solutions is that it needs to consume power to open a way for the fluid to flow (in case it is a normally closed valve) or needs to consume power to close the way for stopping the fluid flow (in case it is a normally open valve). And it continues to consume the power to keep it in the respective position. If power consumption stops, the solenoid valve goes back to its original position.

It would be desirable to have a simple, cost-effective, and reliable solenoid valve that can keep its respective position independent from power supply.

### SUMMARY

The problem is at least partially solved or alleviated by the subject matter of the independent claims of the present disclosure, wherein further examples are incorporated in the dependent claims.

According to a first aspect, there is provided a solenoid valve, comprising: a valve body having an inlet port, an outlet port and a valve seat between the inlet port and the outlet port; a plunger; a spring element biasing the plunger towards or away from the valve seat for adopting a first valve position; a solenoid element at least partially surrounding the plunger, wherein the solenoid element is configured to generate an electromagnetic field for moving the plunger against the bias of the spring element, the plunger thereby adopting a second valve position different from the first valve position; a linkage element linking the plunger to a linkage portion of the solenoid valve; and a pathway in the linkage portion or the plunger, SE:AFE
wherein an end portion of the linkage element is moveable along the pathway following the movement of the plunger, the pathway is configured with a first end position and a second end position for the end portion, and the linkage element maintains the second valve position in the second end position when the solenoid element does not generate the electromagnetic field.

Accordingly, the solenoid valve of this disclosure has an added extra mechanism in the form of the linkage element, linkage portion and the pathway, which are configured in the solenoid valve such that the second valve position can be secured even when the solenoid element is not supplied with power or does not consume power after it reached the second valve position.

Specifically, the solenoid element may comprise an electrical connection portion for connecting to a power supply or be connected to a power supply, which may be part of the solenoid valve or be located outside of the solenoid valve. For example, the solenoid element may be a solenoid coil. The solenoid element may in particular fully or substantially in full surround the plunger. When supplying the solenoid element with power, the electromagnetic field will be generated, which acts on the plunger and/or spring element. Thereby, the plunger is moved against the bias of the spring element holding it in the first valve position. If the spring element, such as but not limited to a coil spring, biases the plunger towards the valve seat, in particular into the valve seat, the plunger may close the inlet port and/or outlet port, thereby normally closing the solenoid valve. In other words, in this case, the first valve position is a closed valve position. Alternatively, if the spring element biases the plunger away from the valve seat, the plunger may open the inlet port and/or outlet port, thereby normally opening the solenoid valve. In other words, in this case, the first valve position is an open valve position. The second valve position may be the respectively different position depending on the first valve position being the closed valve position or the open valve position. Accordingly, the second valve position may be the open valve position or closed valve position.

The linkage element links the plunger to a linkage portion of the solenoid valve, thereby enabling to secure the plunger relative to the linkage portion when an end portion of the linkage element is positioned accordingly in the pathway. The linkage element may for example have an elongated structure. The linkage element may for example be substantially rigid and/or stiff. In an example, the linkage element may be configured as a rod. The rod may have any cross section, including, for example, circular, elliptical, square, rectangular, and similar.

The pathway may be provided as a physical path for the linkage element, along which the linkage element is moveable in conjunction with the movement of the plunger, in either the linkage portion or the plunger. The pathway comprises two distinct end positions for the linkage element, which the linkage element can assume during movement of the linkage element along the pathway. When the solenoid element does not generate the electromagnetic field, e.g., due to no power supply to the solenoid element, the second valve position is maintained by virtue of the linkage element holding the plunger at the linkage portion in the second end position of the pathway. In the first valve position, on the other hand, the first valve position may be maintained with the linkage element being in the first end position of the pathway.

In an example, the linkage portion may be part of the valve body or attached to the valve body. Accordingly, in one alternative, the linkage portion may be located or configured inside the valve body. In another alternative, the linkage portion may be attached to the valve body such that it may be an extra part added or attached to the valve body. For example, the valve body may comprise an armature or armature portion, in which the plunger and/or the spring element may be provided, and which may be surrounded by the solenoid element. The linkage portion may for example be provided inside that armature or armature portion or be attached as an additional part or portion of the valve body thereto.

In an example, the pathway may be non-rotatable relative to the valve body. This means that the pathway is fixed or stationary relative to the valve body. The linkage element may be rotatable relative to the valve body. Accordingly, the linkage element can rotate at least with parts thereof relative to the valve body when the plunger is being moved, thereby enabling a movement of the linkage element along the pathway such that the first and second end positions may be assumed.

In an example, one of two end portions of the linkage element may be configured as a rotatable end portion such that the linkage element is rotatable relative to the valve body. The other one of the two end portions, which may be opposite of one another along a longitudinal extension of the linkage element, may also be a rotatable end portion or a non-rotatable end portion. In any case, the rotatability of the linkage element at one of both of its end portions, in particular ends, where these may be fixed or attached to the linkage portion and the plunger, thereby enables a movement of the linkage element along the pathway such that the first and second end positions may be assumed.

In an example, the pathway may be a circumferential pathway. In other words, the pathway may be a closed pathway, e.g., similar to a loop or any other form, which comprises the first end position and the second end position.

In an example, the pathway may comprise a profile, in which the second end position is located at a second low point or a second high point between adjacent high points or adjacent low points. The profile is the geometry or shape of the pathway, in particular along the circumferential extension of the pathway, which the linkage element follows along its movement following the movement of the plunger. Along this movement, the second end position may be located at a low point or high point (herein referred to as second merely to serve as reference to the "second" end position and not necessarily but optionally also indicating the presence of a first low point or first high point for the first end position). Low and high are to be seen relative to the adjacent high points or low points, such that the second low point has thereto adjacent high points along the profile making it a relative low point, and the second high point has thereto adjacent low points along the profile making it a relative high point. Low and high may in particular differ in their position along the length of the plunger or along an axis of the solenoid valve, along which the plunger, spring element and/or solenoid element may be extending.

In an example, in the profile of the pathway, the first end position may be located at a first low point or a first high point beyond the adjacent high points or adjacent low points. Specifically, the first end position may be located at a first low point between adjacent high positions and the second end position may be located a second low point between the same adjacent high positions or, alternatively, between adjacent high points different from the other high positions. Alternatively, for example, the second end position may be located at a second high point between adjacent low positions and the second end position may be located a second high point between the adjacent low positions or, alternatively, adjacent low positions different from the other low positions.

In an example, the first end position and the second end position may be located opposite of one another. Specifically, the first end position and the second end position may be located opposite of one another in the direction along the longitudinal extension of the plunger or the axis of the solenoid valve, along which the spring element, plunger and/or solenoid element may be extending in length.

In an example, the pathway may be configured as a track inside the linkage portion or the plunger, the end portion of the linkage element being moveably disposed within the track. Specifically, one of two end portions or ends of the linkage elements may be moveably disposed within the pathway track, whereas the other end portion or end may be fixedly attached to the plunger or linkage portion. The track may in particular be configured as a groove or slot inside the plunger or linkage portion. The groove or slot may follow the pathway or, in other words, the extension, e.g., circumferential, of the pathway. The track may accordingly be open with one surface of the groove or slot for the linkage element to be moved along the pathway, and otherwise be surrounded by walls of the linkage element or plunger. Accordingly, the linkage element may be configured moveable within or inside and along the pathway track.

In an example, the first valve position and the second valve position may be either of an open valve position and a closed valve position.

In an example, the pathway may be configured with a third end position for the end portion, and the linkage element may maintain a third valve position in the third end position when the solenoid element does not generate the electromagnetic field. Accordingly, there may be provided an intermediate position between the first end position and the second end position of the pathway, which may, similar to the first and second end position, be at a high or low point between adjacent low or high points, for example.

In an example, the third end position may be a partially open position of the solenoid valve. Accordingly, a solenoid valve may be provided, which does not need to be supplied with power for keeping the solenoid valve in any of three positions, namely an open valve position, a closed valve position, and a partially open position, in which the plunger is not fully located inside or closing the valve seat between the inlet port and the outlet port.

According to a second aspect, there is provided a vehicle comprising at least one solenoid valve according to the first aspect of this disclosure. The vehicle may be of any type including but not limited to a car, in particular passenger car, truck, and similar.

In an example, the vehicle may comprise a thermal management system having the at least one solenoid valve and an energy source for supplying energy thereto. The thermal management system may for example but not limited thereto be configured for controlling the room temperature inside a cabin of the vehicle. Accordingly, the at least one or multiple solenoid valves may be closed and opened to control a flow of air into and/or out of the cabin.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figures 1 to 5: show schematic cross-sectional views of a solenoid valve changing between positions;
- Figure 6: shows a schematical cross-sectional view an alternative example of a solenoid valve;
- Figure 7: shows a schematic cross-sectional view of the pathway used in the solenoid valves of Figs. 1 to 6;
- Figure 8: shows a schematic cross-sectional view of an alternative pathway; and
- Figure 9: shows a schematic illustration of a vehicle.

### DETAILED DESCRIPTION

The Figures are merely schematic representations and serve only to illustrate examples of the disclosure. Identical or equivalent elements are in principle provided with the same reference signs.

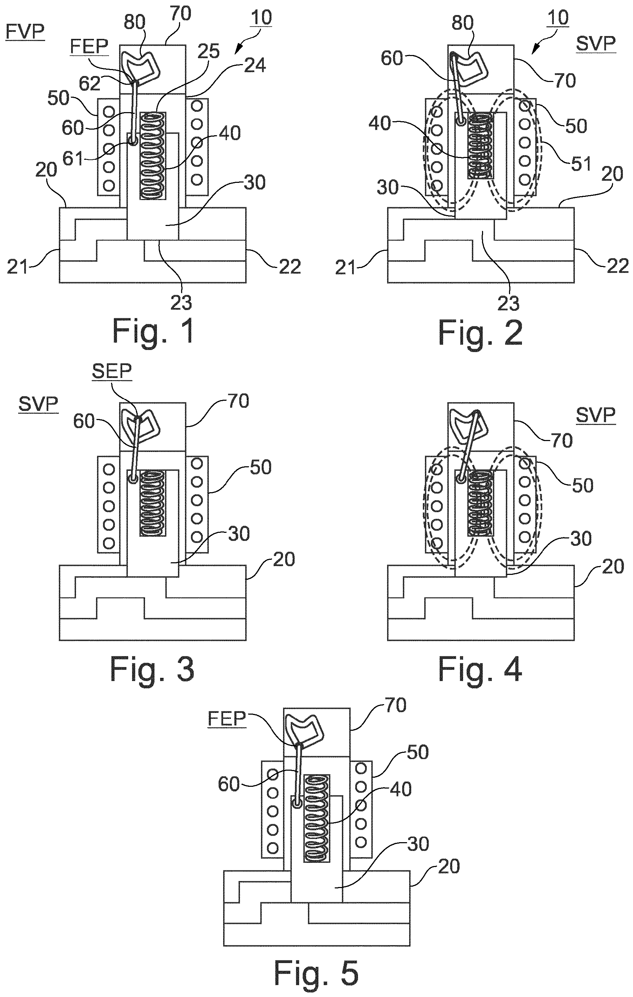

Figures 1 to 5 show cross-sectional and schematic views of a solenoid valve 10 changing between positions. The solenoid valve 10 comprises a valve body 20 having an inlet port 21, an outlet port 22 and a valve seat 23 located between the inlet port 21 and the outlet port 22. The valve body 20 of this example further comprises an armature portion 24, in which a plunger 30 is moveably disposed, specifically along a longitudinal extension or length of the armature portion 24. Also, a spring element 40 is arranged inside the armature portion 24, specifically inside a spring section 25 of the armature portion 24. Exemplary, the spring element 40 is shown herein as a coil spring. The spring element 40 biases the plunger 30 towards the valve seat 23 for adopting a first valve position FVP, which in this example is a closed valve position.

Accordingly, in Figs. 1 to 5, a normally closed valve is exemplary showed. However, alternatively, a normally opened valve could be implemented, where the spring element 40 biases the plunger 30 away from the valve seat 23, thereby normally opening the solenoid valve 10.

Figs. 1 to 5 further show a solenoid element 50 in the form of a solenoid coil surrounding the plunger 30. The solenoid element 50 is configured to generate an electromagnetic field 51 when being supplied with power for moving the plunger 30 against the bias of the spring element 40, the plunger 30 thereby adopting a second valve position SVP different from the first valve position FVP. In this example, the second valve position SVP is an open valve position.

The solenoid valve 10 further comprises a linkage element 60 linking the plunger 30 to a linkage portion 70 of the solenoid valve 10. The linkage portion 70 is part of the valve body 20 or attached to the valve body 20. In this example, the linkage portion 70 is added on top of the armature portion 24 or provided as part thereof, specifically but not limited to an upper segment of the armature portion 24.

A pathway 80 is disposed inside the linkage portion 70 or the plunger 30. One of two end portions 61, 62, in this example end portion 62, of the linkage element 60 is moveable along the pathway 80 following the movement of the plunger 30. The other end portion 61 in this example is fixedly arranged at the plunger. The linkage element 60 may be rotatable at one or both end portions 61, 62 for following the pathway 80. The pathway 80 is configured as a track with a circumferential pathway 80 with a first end position FEP and a second end position SEP for the end portion 62.

The first end position FEP and the thereto corresponding first valve position FVP are shown in Fig. 1.

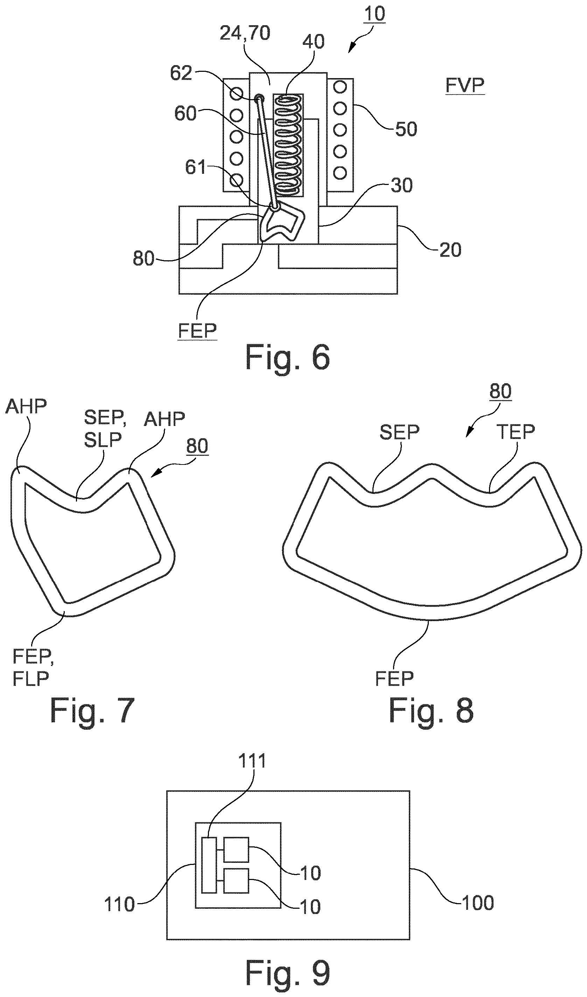

As shown in Fig. 2, when the solenoid element 50 is supplied with power, the plunger 30 is being pulled up and the spring element 40 is being compressed by the generated electromagnetic field 51, thereby opening the solenoid valve 10. As seen in Figs. 2 and 3, the linkage element 60 is thereby moved from the first end position FEP, which is a first low position FLP in the profile of the pathway 80 between thereto adjacent high points AHP as shown in Fig. 7, towards the second end position SEP, thereby allowing the solenoid valve 10 to assume the second valve position SVP, which is the open valve position as described herein. As shown in Fig. 2 specifically, along the profile of the pathway 80, the linkage element 60 reaches one of the adjacent high points AHP, from where it moves or slides into the second end position SEP, as shown in Fig. 3. The linkage element 60 maintains the second valve position SVP in the second end position SEP when the solenoid element 50 does not generate the electromagnetic field 51 as shown in Fig. 3.

As seen in Fig. 4, for closing the solenoid valve 10 being in the second valve position, the solenoid element 50 is again being supplied with power, which generates the electromagnetic field 51 and moves the plunger 30 towards the valve seat 23 decompressing the spring element 40. Here, the linkage element 60 is moved inside the track of the pathway 80 via the other adjacent high point in an exemplary clockwise direction and towards the first end position FEP as shown in Fig. 5.

Figure 6 shows an alternative of the solenoid valve 10, where the pathway 80 is disposed as a track inside the plunger 30 instead of the valve body 20 as shown in Fig. 5. The working principle of the solenoid valve 10 is similar to the one of Figs. 1 to 5 with the difference that the pathway 80 is turned upside-down and has high points as first and second end positions FEP, SEP instead of low points, which are next to adjacent low points rather than adjacent high points as in Figs. 1 to 5.

Figure 8 shows an alternative form or shape of the pathway 80 compared to the one of Figs. 1 to 7. Here, a third end position TEP is provided in addition to the first end position FEP and the second end position SEP. The third end position TEP in this example is located between the second adjacent high point AHP next to the second end position SEP and yet another, third adjacent high point. When the linkage element 60 is moved following the movement of the plunger 30 upon further generation of an electromagnetic field 51, with the pathway 80 of Fig. 8, before assuming the first end position FEP, the third end position TEP will be assumed by the solenoid valve 10, which is a partially open valve position. Only after further electromagnetic field 51 generation will the solenoid valve 10 assume the first end position FEP.

Figure 9 shows a schematic illustration of a vehicle 100 comprising a thermal management system 110 with an energy source 111 for supplying energy or, in other words, power. The thermal management system 110 in this example comprises two solenoid valves 10 as explained herein, which are powered by the energy source 111 for assuming any of the herein explained open valve position, closed valve position, and partially open valve position.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 10: solenoid valve
- 20: valve body
- 21: inlet port
- 22: outlet port
- 23: valve seat
- 24: armature portion
- 25: spring section
- 30: plunger
- 40: spring element
- 50: solenoid element
- 60: linkage element
- 61: end portion
- 62: end portion
- 70: linkage portion
- 80: pathway
- 100: vehicle
- 110: thermal management system
- 111: energy source
- FVP: first valve position
- FEP: first end position
- FLP: first low point
- SVP: second valve position
- SEP: second end position
- SLP: second low point
- TEP: third end position
- AHP: adjacent high point

## Claims

1. A solenoid valve (10), comprising:
a valve body (20) having an inlet port (21), an outlet port (22) and a valve seat (23) between the inlet port (21) and the outlet port (22);
a plunger (30);
a spring element (40) biasing the plunger (30) towards or away from the valve seat (23) for adopting a first valve position (FVP);
a solenoid element (50) at least partially surrounding the plunger (30), wherein the solenoid element (50) is configured to generate an electromagnetic field (51) for moving the plunger (30) against the bias of the spring element (40), the plunger (30) thereby adopting a second valve position (SVP) different from the first valve position (FVP);
a linkage element (60) linking the plunger (30) to a linkage portion (70) of the solenoid valve (10); and
a pathway (80) in the linkage portion (70) or the plunger (30), wherein an end portion (61, 62) of the linkage element (60) is moveable along the pathway (80) following the movement of the plunger (30), the pathway (80) is configured with a first end position (FEP) and a second end position (SEP) for the end portion (61, 62), and the linkage element (60) maintains the second valve position (SVP) in the second end position (SEP) when the solenoid element (50) does not generate the electromagnetic field (51).

2. The solenoid valve (10) of claim 1, wherein the linkage portion (70) is part of the valve body (20) or attached to the valve body (20).

3. The solenoid valve (10) of claim 1 or 2, wherein the pathway (80) is non-rotatable relative to the valve body (20), and the linkage element (60) is rotatable relative to the valve body (20).

4. The solenoid valve (10) of claim 3, wherein one of two end portions (61, 62) of the linkage element (60) is configured as a rotatable end portion (61, 62) such that the linkage element (60) is rotatable relative to the valve body (20).

5. The solenoid valve (10) of any one of the previous claims, wherein the pathway (80) is a circumferential pathway (80).

6. The solenoid valve (10) of any one of the previous claims, wherein the pathway (80) comprises a profile, in which the second end position (SEP) is located at a second low point (SLP) or a second high point between adjacent high points (AHP) or adjacent low points.

7. The solenoid valve (10) of claim 6, wherein in the profile of the pathway (80), the first end position (FEP) is located at a first low point (FLP) or a first high point beyond the adjacent high points (AHP) or adjacent low points.

8. The solenoid valve (10) of any one of the previous claims, wherein the first end position (FEP) and the second end position (SEP) are located opposite of one another.

9. The solenoid valve (10) of any one of the previous claims, wherein the pathway (80) is configured as a track inside the linkage portion (70) or the plunger (30), the end portion (61, 62) of the linkage element (60) being moveably disposed within the track.

10. The solenoid valve (10) of any one of the previous claims, wherein the first valve position (FVP) and the second valve position (SVP) are either of an open valve position and a closed valve position.

11. The solenoid valve (10) of any one of the previous claims, wherein the pathway (80) is configured with a third end position (TEP) for the end portion (61, 62), and the linkage element (60) maintains a third valve position (TVP) in the third end position (TEP) when the solenoid element (50) does not generate the electromagnetic field (51).

12. The solenoid valve (10) of claim 11, wherein the third end position (TEP) is a partially open position of the solenoid valve (10).

13. The solenoid valve (10) of any one of the previous claims, wherein the linkage element (60) is configured as a rod.

14. A vehicle (100) comprising at least one solenoid valve (10).

15. The vehicle (100) of claim 14, wherein the vehicle (100) comprises a thermal management system (110) having the at least one solenoid valve (10) and an energy source (111) for supplying energy thereto.
